# EUROPEAN PATENT SPECIFICATION

(11) **EP 2 578 367 B1**
(45) Date of publication and mention of the grant of the patent: **09.04.2014**
(21) Application number: 10734765.0
(22) Date of filing: 27.05.2010
(51) Int. Cl.: B25J 17/02, B25J 9/00

(54) **POSITIONING DEVICE CONTROLLED BY CABLES**
DISPOSITIVO DE POSICIONAMIENTO CONTROLADO POR CABLES
DISPOSITIF DE POSITIONNEMENT COMMANDÉ PAR DES CÂBLES

(43) Date of publication of application: 10.04.2013
(73) Proprietor: FUNDACIÓN TECNALIA RESEARCH & INNOVATION, 20009 San Sebastian (Guipuzcoa) (ES)
(72) Inventor: COLLADO JIMÉNEZ, Valentín, E-20009 San Sebastian (ES); GUSTAVSSON, Lars, E-20009 San Sebastian (ES); CULLA IRASTORZA, David, E-20009 San Sebastian (ES)
(74) Representative: Carpintero Lopez, Francisco
(86) International application number: PCT/ES2010/070355
(87) International publication number: WO 2011/148004

(56) References cited:
- EP-A2- 1 544 911
- WO-A1-95/23053
- JP-A- 62 117 653
- SO-RYEOK OH ET AL: "Cable-suspended planar parallel robots with redundant cables: controllers with positive cable tensions", 2003 IEEE INTERNATIONAL CONFERENCE ON ROBOTICS AND AUTOMATION, PISCATAWAY, NJ, USA; [PROCEEDINGS OF THE IEEE INTERNATIONAL CONFERENCE ON ROBOTICS AND AUTOMATION],, vol. 3, 14 September 2003 (2003-09-14), pages 3023-3028, XP010668439, DOI: DOI:10.1109/ROBOT.2003.1242055 ISBN: 978-0-7803-7736-3

## Description

### Technical Field of the Invention

The present invention is comprised in the technical field of robotic devices which allow the positioning of actuators, manipulators, implements, tools, etc. for the activities of production, manipulation, modification, inspection, etc., on a work surface or the medium which surrounds it.

### Background of the Invention

The current need to automate processes for the purpose of reducing costs and increasing production as well as the efficiency of each process is known. Current robots, both those based on parallel kinematics and on serial kinematics, are formed by a series of mechanical actuators and structures with fixed dimensions, which limits the range of their work space to the maximum that can be reached by their articulations and structures. Larger work spaces require larger, heavier and more dynamic structures which involve oversizing the actuators, which finally makes it more expensive and makes it difficult to automate largesized parts.

To solve these drawbacks, systems have been designed which allow increasing, in a cost-effective manner, the range of the robots by means of the replacement of part of the structure of the robots with cables and using a support surface. The available work space is then as large as that allowed by the length of cable. Furthermore, by reducing the structural size of a robot, its weight is reduced and a machine with a greater dynamic capacity is obtained. Technically, the cables have the drawback of working only under traction, so controlling the degrees of freedom of a mechanism due to any external or internal excitation is not so evident. A traditional mechanical actuator can work under traction and under compression, whereas the cable can only work under the former. To completely control n degrees of freedom at least n+1 cables arranged in a specific and suitable manner in each application are necessary. Therefore, the fact that the cables do not work under compression means that the resulting work space is not so evident, requires a more detailed study and it is not always possible to reach a determined position and orientation of the element controlled by the cables. Generally, the set of valid points in a cable kinematics will depend on the number of cables and on their geometric arrangement. Valid points are understood as those which allow controlling all the degrees of freedom of the mechanism without the cables starting to work under compression. Furthermore, the cables have problems of interfering with one another and the surrounding medium, so it is necessary to verify said interferences and check them throughout the work space.

Documents US-4932210, WO95/23053, and CN-101602209 describe robots suspended by cables with cable positioning devices which are complex both with regard to their structure and the guidance of the cables, which is susceptible of interference between the cables and with the work space. They furthermore require a large number of motors and a large associated support structure. On the other hand, documents JP-3600905 and JP-2030476 describe robots that can be displaced by cables to work on surfaces which have limitations with regard to the control of the degrees of freedom with external excitations for the points demarcated within the work space, due to the fact that all the patent documents refer to an insufficient number of cables and all the cables are contained in one and the same plane. To mitigate this instability, document CN-101554892 proposes a ventilator which is used to maintain a mobile platform positioned above the surface. However, the stability provided by the effect of such ventilator is not as effective as desired in applications that are more demanding from the viewpoint of vibrations and stresses (drilling, polishing, cutting, painting, etc.), and the existence of the ventilator also involves the presence of an additional element to be controlled. Document JP-62117653 discloses a working pedestal that can be displaced by cables on a wall surface. The pedestal is pushed against the wall by the cables, but has only two degrees of freedom in translation.

In view of the foregoing, it was desirable to develop a positioning system which overcomes the drawbacks of the systems of the state of the art.

### Description of the Invention

The object of the present invention is to overcome the drawbacks of the state of the art explained above by means of a positioning device controlled by cables comprising four cables connected at their respective first ends in respective anchoring mechanisms of a platform and at their respective second ends in respective cable gathering and release mechanisms (which can be arranged in diagonally opposing pairs) and driven by respective motors for displacing the platform with respect to a work surface by means of the controlled release and gathering of the cables, which is characterized in that
the platform has a support base provided with means for sliding over the work surface (for example, by means of rolling elements or elements for sliding without contact by means of creating magnetic fields);
at least one of the cables extends obliquely between a first plane parallel to the work surface in which the cable gathering and release mechanism is arranged and a second plane parallel to the work surface in which the anchoring mechanism is located such that the tractive force exerted in the mentioned cables by the cable release and gathering mechanisms has a resultant, with a component perpendicular to the work surface which pushes the support base of the platform against the work surface and a component parallel to the work surface which causes the sliding of the support base over the work surface.

According to the invention, each anchoring mechanism is located at a distance from the support base provided with rolling elements of the platform, such that each cable extends obliquely with respect to the work surface between the anchoring mechanism and the cable gathering and release mechanism to which it is connected. Furthermore, each anchoring mechanism can rotate perpendicularly and parallel with respect to the support base and can be a cardan shaft. The anchoring mechanisms comprise a first pair of anchoring mechanisms arranged in a first row and connected to respective cables of a first pair of cables, and a second pair of anchoring mechanisms arranged in a second row and connected to respective cables of a second pair of cables, such that each cable connected to an anchoring mechanism of said first row intersects with a cable connected to an anchoring mechanism of said second row, such that the traction of the cables by the respective cable gathering and release mechanisms forces the support base of the platform against the work surface.

The present invention is useful as a robotic platform with parallel kinematics controlled by means of cables and through the support on the work surface. The platform is displaced, maintaining its equilibrium at all times on said support surface by varying the lengths and the tensions of the cables. Since the length of each of the four cables can vary, such cables are wound or released as appropriate. Once it has been reached, the platform can be prepared to perform any type of operation on the surface. To that end, it may be necessary to increase the tension of the cables for the purpose of increasing the resultant component against the work surface and increasing the rigidity of the mechanism.

The platform has enough space therein for assembling an additional actuator or manipulator on it (not shown in the drawings attached to the present specification) which is in charge of performing any type of activity of production, manipulation, modification, inspection, etc., on the work surface or the medium which surrounds it. Such additional robotic arm or actuator can be controlled by means of an umbilical cable or even by using the cables for displacing the platform. Therefore, the present invention enables performing automated operations on a determined work surface or the surrounding medium thereof by covering a work space that is much larger than the typical work spaces at a very low cost and with high dynamic capacity.

The anchoring mechanisms of the first row of said support base are preferably located perpendicularly at a greater distance than the anchoring mechanisms of the second row.

In one embodiment of the invention, the platform comprises a lower base comprising the support base and an upper base in which the anchoring mechanisms are arranged; and connection means for attaching the lower base with the upper base. According to this embodiment, the upper platform can have a larger contour than the lower platform.

According to the invention, each cable gathering and release mechanism can comprise an orienting device, a spindle device and a cable storage device. In this case, the cable storage device comprises a drum for winding and unwinding the cable by rotating about a drum axle, and the spindle device comprises a carriage which moves linearly along a spindle axle guiding the cable so that it moves forward to a distance corresponding to the width of a spiral of the drum when the cable is gradually wound on or unwound from the drum. In turn, the orienting device orients the cable towards the spindle device and comprises a pair of input rollers between which the cable moves towards the platform. The input rollers are assembled in a rotating arm which rotates according to the position of the cable. The orienting device, the spindle device and the cable storage device can be assembled in a common support base.

In one embodiment of the cable gathering and release mechanism, the drum axle and the spindle axle are parallel and the drum is connected to the motor, for example through a reduction gear. The axle of the drum and the spindle axle are provided with respective gears arranged such that the axle of the drum confers rotational movement to the spindle, whereas the orienting device comprises a larger pulley which rotates about a shaft perpendicular to the spindle axle and redirects the cable towards the spindle device parallel to the spindle axle. This larger pulley can be arranged in a side arm connecting the carriage with the sliding body. In turn, the spindle device comprises an auxiliary linear guide parallel to the spindle axle, and the carriage comprises a sliding body which slides over the auxiliary linear guide when the carriage moves forward on the spindle axle, and a guide pulley which directs the cable perpendicularly towards the axle of the drum.

The rotating arm and the larger pulley can be assembled in respective passive rotating shafts of a passive rotating mechanism which allows the rotation of the rotating arm and of the larger pulley in a shaft coaxial with the spindle axle. The passive rotating mechanism can be connected to a rotary encoder which determines the rotation of the rotating arm and of the larger pulley in said coaxial shaft. The rotating arm of the orienting device can also be connected to a rotating shaft transmitting its rotational movements to another rotary encoder.

The cable release and gathering mechanisms can be assembled in an auxiliary structure surrounding at least part of the work surface.

Based on what has been set forth above, it is inferred that the positioning device controlled by cables according to the invention provides greater stability than the devices of the state of the art and a capacity of withstanding external excitations (especially in the direction perpendicular to the work surface) controlled at all times by means of the tension of the cable, and therefore greater capacity and stability when performing all types of operations than that which is provided by a ventilation jet. Furthermore, the present invention has the capacity to perform diverse mechanical operations that are much more demanding from the viewpoint of vibrations and stresses (drilling, polishing, cutting, painting, etc.) while the mobile platform remains stationary solely as a result of the tension of the cables and their arrangement. The present invention also maximizes the work space available between the cable gathering and release elements, and considers a reduction both in the number of motors and in the associated support structure when performing jobs on work surfaces or in media close to the work surface, significantly reducing its cost and the complexity of the control since the number of actuators is reduced. Furthermore, the spatial structures of cables do not interfere on the work surface or in the work space. Finally, the simplicity of the present invention with respect to the state of the art allows greater modularity and portability since it does not necessarily need a support structure for the operations.

The rotary encoders of the passive cable following mechanisms provide redundant information about the orientation of each of the cables and, therefore, the position of the platform.

### Brief Description of the Drawings

Aspects and embodiments of the invention are described below based on different schematic drawings, in which
Figure 1 shows the assembly of the invention.
Figure 2 shows the degrees of freedom of the invention
Figures 3 and 4 show the assembly of the invention in other possible orientations.
Figure 5 shows an embodiment of a cable gathering and release mechanism according to the invention.
Figure 6 shows the initial cable orienting device corresponding to the mechanism of Figure 5.
Figure 7 shows the spindle device corresponding to the mechanism of Figure 5.
Figure 8 shows the drum device corresponding to the mechanism of Figure 5.
Figure 9 is an upper perspective view of an embodiment of a platform according to the present invention
Figure 10 is a lower perspective view of the platform illustrated in Figure 9.
Figure 11 shows an embodiment of the cable kinematics with the points for attaching cables at different distances from the work surface.
Figures 12 and 13 show the angles measured by the rotary encoders located in the orienting device.
Figure 14 shows the force component which keeps the platform against the wall.
Figure 15 shows the possible height variations of the points for attaching the cable to prevent collisions.

Reference numbers can be seen in these drawings which identify the following elements:
- 1: positioning platform
- 2: work surface
- 3: assembly of cables
- 4: cable gathering and release mechanism
- 5: auxiliary structure
- 6: means for sliding
- 7: orienting device
- 8: spindle device
- 9: cable storage device
- 10: servomotor
- 11: gear of the spindle device
- 12: gear of the cable storage device
- 13: support base
- 14: input pulleys
- 15: arm
- 16: rotating shaft
- 17: first rotary encoder
- 18: larger pulley
- 19: passive rotating mechanism
- 20: passive rotating shafts
- 21: supports
- 22: second rotary encoder
- 23: spindle supports
- 24: spindle axle
- 25: carriage
- 25a: side arm
- 25b: sliding body
- 26: means for sliding-auxiliary linear guide
- 27: pulley
- 28: drum
- 29: restraint
- 30: front support
- 31: drum axle
- 32: reduction gear
- 33: support
- 34: upper base
- 35: lower base
- 36: cardan shaft
- 37: attachment columns
- r: length of released cable
- r, θ, ϕ: spherical coordinates

### Embodiments of the Invention

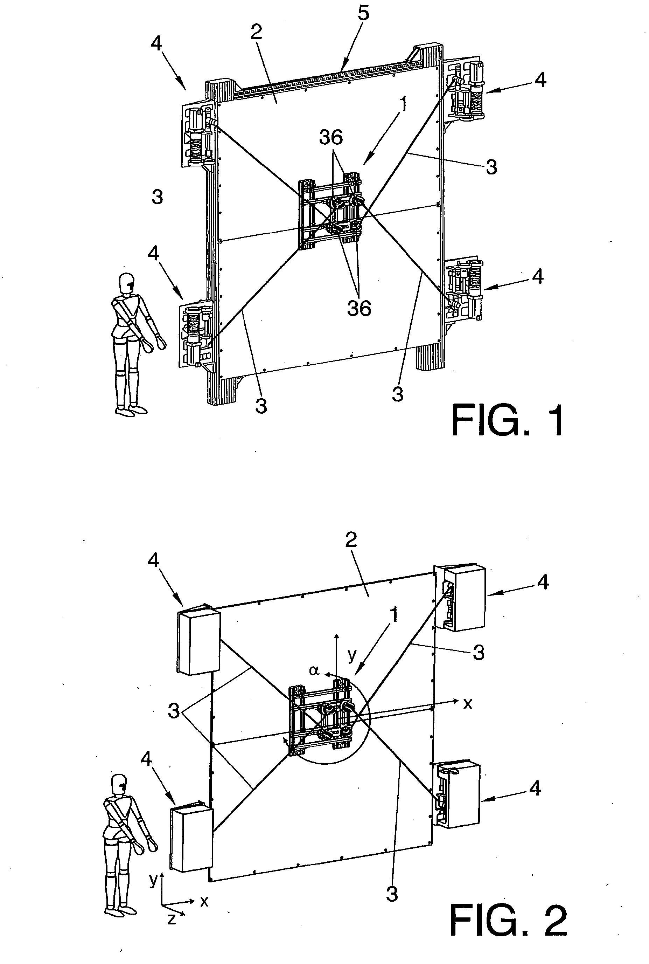

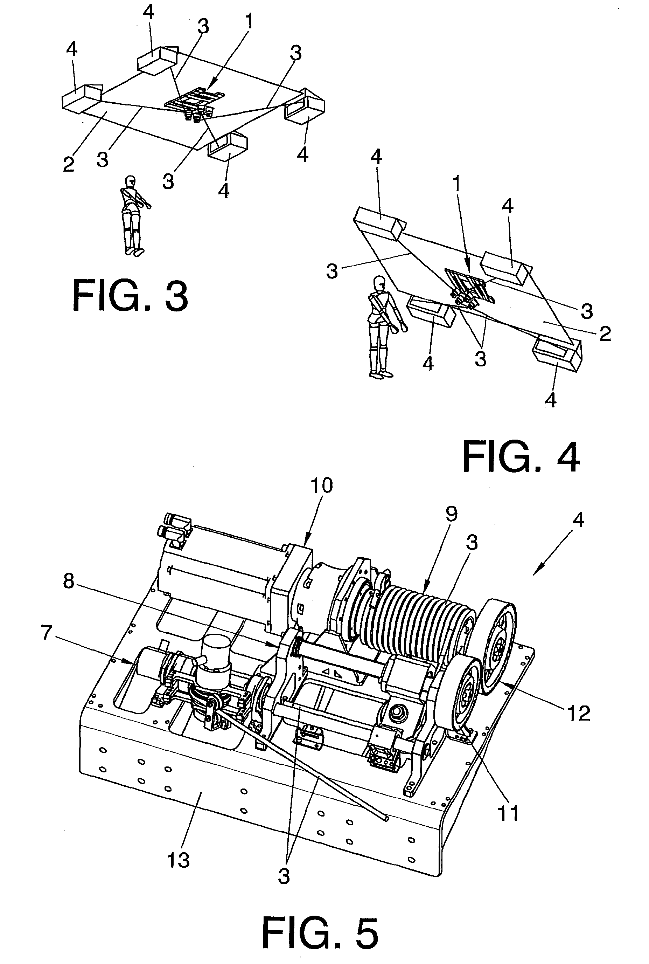

In the embodiment of the invention shown in the figures, the positioning platform -1- the degrees of freedom of which are completely controlled. The platform -1- is permanently supported on a fixed surface -2-, referred to as work surface, and is controlled through an assembly of cables -3-. The first end of each cable of said assembly -3- is attached to a cable gathering and release mechanism -4- which controls the length and tension of the corresponding cable -3- and which remains fixed on an auxiliary structure -5- although it can be alternatively or complementarily immobilized in the same work surface -2- or in a bearing structure of the work surface -2-. The other end of each cable -3- is anchored to the positioning platform -1- for pulling on same. The arrangement of the cables -3- maintains the platform -1-, regardless of the orientation of the work surface -2-, supported against the work surface -2- and in equilibrium with any external or internal excitation. The length of each cable -3- is controlled through the operation of the cable gathering and release mechanism -4-, which allows displacing the platform -1- along the entire work surface -2- in a controlled manner and precisely positioning it. The platform -1- is completely controlled. The assembly of the cables -3- and the work surface -2- restrict three degrees of freedom of the platform: two rotations and one displacement, and they allow controlling the rotation on the shaft perpendicular to the surface, as well as two displacements (Figure 2). This is achieved as a result of the arrangement of the cables -3-, which is such that it always generates a perpendicular component against the surface. This allows the platform -1- to be able to work on inclined work surfaces -2- (Figure 4) and even upside down (Figure 3).

As can be seen in Figures 5 to 8, the cable gathering and release mechanism -4- is assembled on a base -13- and basically consists of an orienting device -7- for the inlet of the cable -3-, a spindle device -8- assuring the orderly winding of the cable, a storage device -9- for the storage of the cable -3- and a servomotor -10-. The spindle device -8- and the storage device -9- are provided with respective gears -11-, -12- which are in charge of transmitting the rotational movement of the drum -28- driven by a servomotor -10-, into a forward movement of the spindle -24- so that the latter guides the cable into the corresponding groove of the drum -28- in an orderly manner.

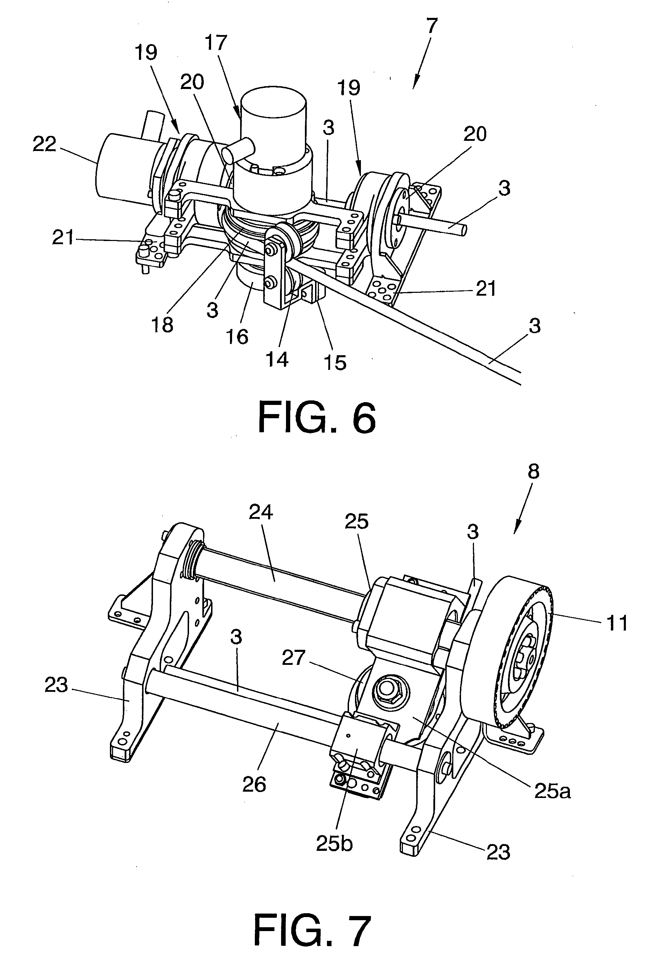

The orienting device (Figure 6) comprises two input pulleys -14- between which the cable -3- moves and the function of which is to passively follow the cable -3-. Each cable -3- will vary its length according to the position of the platform -1- that is ordered, which means that each cable -3- of the cable device is oriented in a corresponding manner, as if it was a vector in spherical coordinates, r, θ and ϕ.

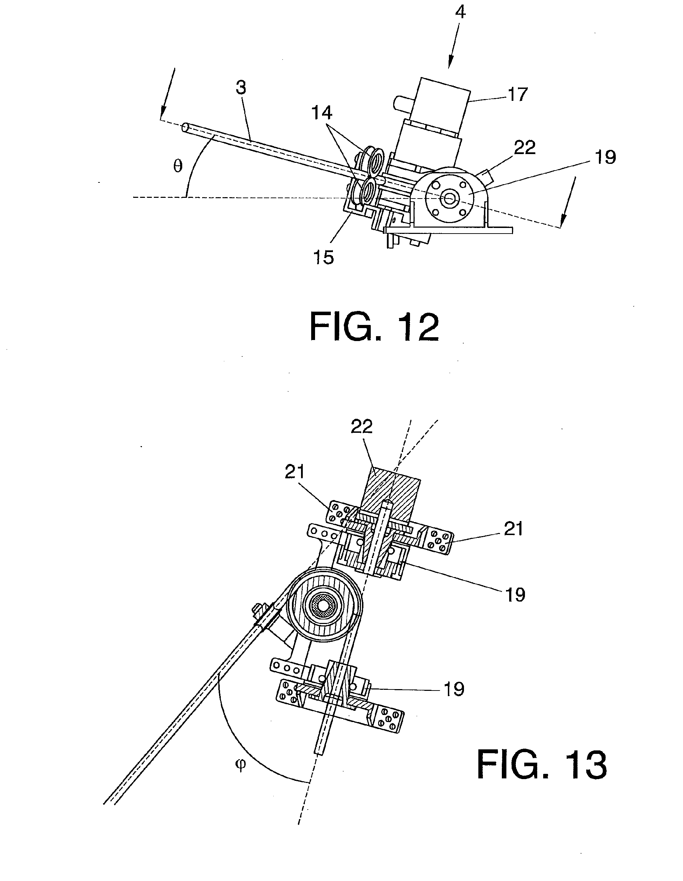

The input pulleys -14- transmit the movement of the respective cable -3-through an arm -15- to the shaft -16- which rotates in the coordinate ϕ. This rotation is collected by the first rotary encoder -17- and corresponds to coordinate ϕ (Figure 13). Next, the cable -3- is again led through a larger pulley -18- which redirects it towards the spindle device -8-. The larger pulley -18- is connected to a passive rotating mechanism -19- which also follows the cable -3-, obtaining the angle θ. The passive rotating mechanism -19- comprises two shafts -20-supported in respective supports -21-, and their rotation (Figure 12) is collected by the second rotary encoder -22-. The coordinate r will be measured with the rotary encoder of the motor. Actually, it is only necessary to know the length of released cable, r. The mentioned angular coordinates will be used as redundant measurements and for the initial calibration of the mechanism.

After traversing the orienting device -7-, the cable -3- is again led to the spindle device -8- (Figure 7) comprising two facing supports -23- in which a spindle -24- and an auxiliary linear guide -26- are assembled. The spindle axle -24- receives part of the torque through the gear (11) which, according to what has been indicated above, meshes with gear -12- of the storage device -9-. A carriage -25- is assembled in the spindle -24-, which carriage moves longitudinally as the spindle -24- rotates and is connected to the auxiliary linear guide -26- by means of a side arm -25a- connected to a sliding body -25b- which runs longitudinally in the auxiliary linear guide -26-. A guide pulley -27- is provided in the side arm -25a- of the carriage -25- which tangentially orients the incoming cable -3- longitudinally in the spindle device -8- from the orienting device -7- towards the drum -28- of the storage device -9- of the cable -3-. The ratio between the gears -11, 12- is designed such that the passage of the spindle -28- is such that the carriage -25-moves forward, driving the guide pulley -27- with it such that for each turn of the drum -28- of the storage device -9-, the guide pulley -27- moves forward to a distance corresponding to the width of a spiral of the drum -28-. It is thus assured that the cable -3- is gathered up in an orderly manner without stacking up on itself.

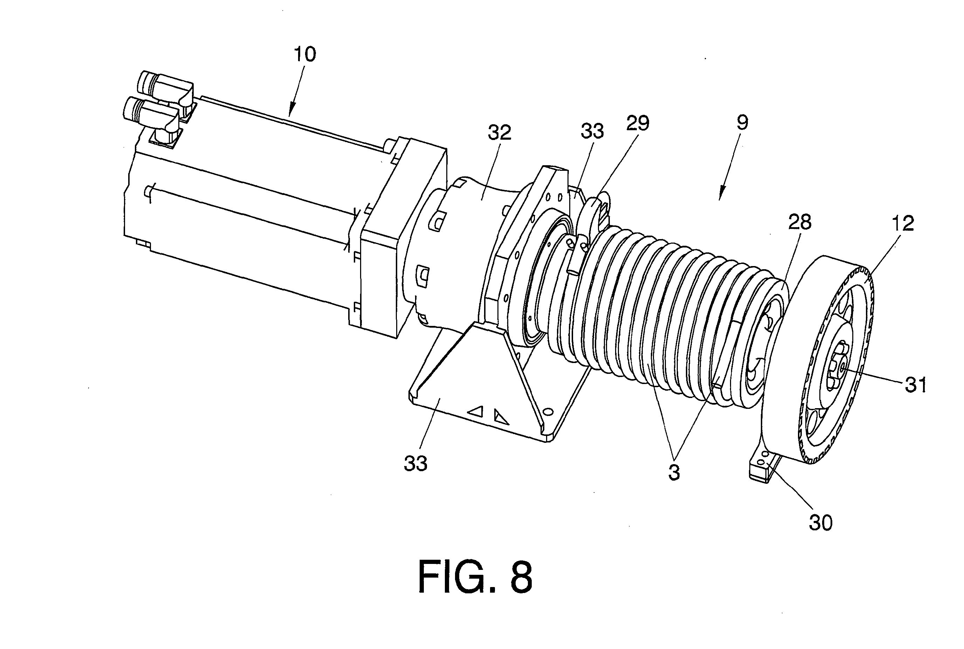

In the storage device -9- (Figure 8), the end of the axle of the drum -28- to which the gear -12- is connected is supported in a first support -30-. The opposite end of the axle of the drum -28- is connected to a servomotor -10- through a reduction gear -32- forming an assembly which is supported in the support -33-. The end of the cable -3- is anchored to the restraint -29-, such that with the rotation of the drum -28- in one direction or the other, the cable -3-, oriented by the guide pulley -27- of the spindle device -8-, is gradually wound on or unwound from the spirals of the drum -28-.

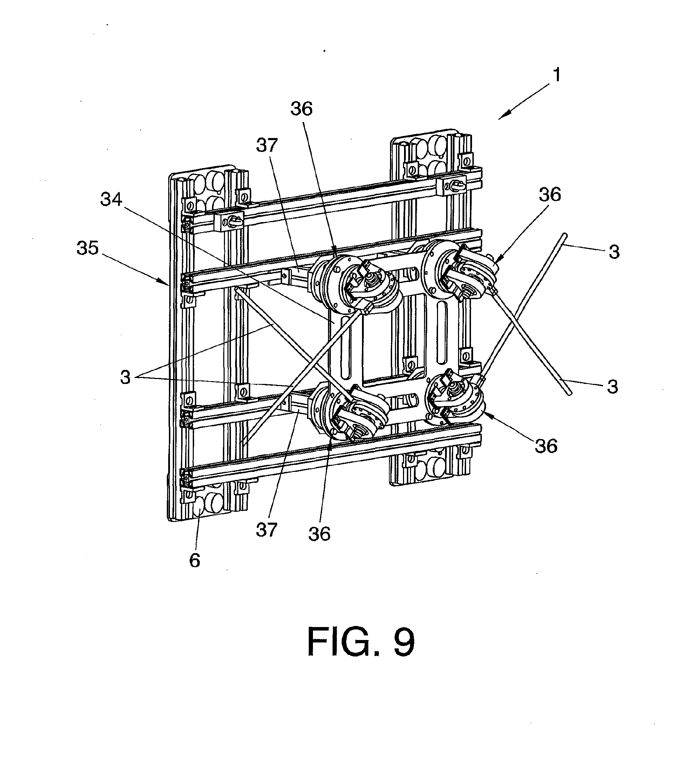

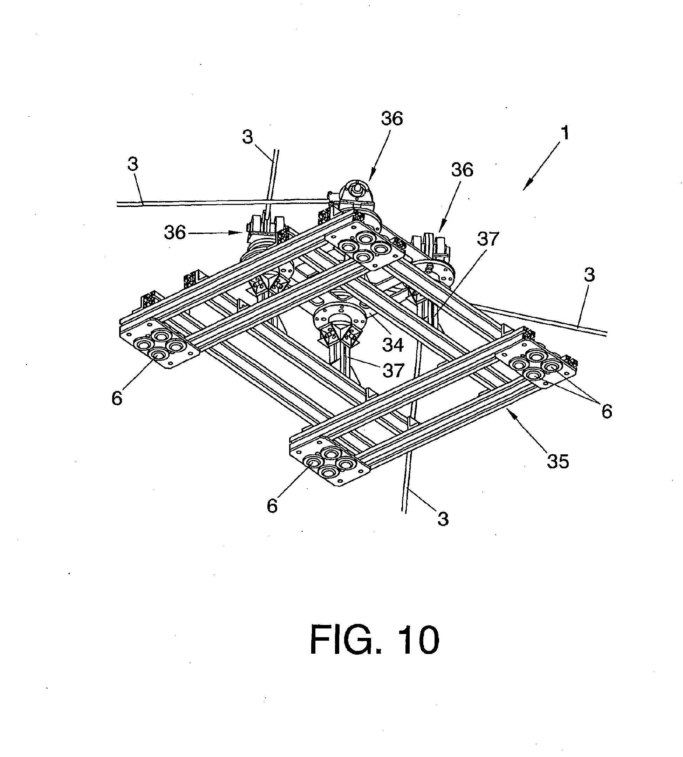

The platform -1- shown in Figures 9 and 10 comprises a lower base -35- ormed fby a series of structural aluminum profiles provided in the areas of its corners with rolling elements -6-, such as in the form of balls, for example, which allow the platform -1- to roll freely over the work surface -2-, and an upper base -34- in which four cardan shafts -36- are arranged, to each of which the end of one of the cables -3- is respectively anchored, the opposite end of which is anchored to the restraint -29- of the drum device -9- of the corresponding cable gathering mechanism -4-. The upper base -34- and the lower base -35- are attached to one another by means of attachment columns -37-.

The function of the cardan shafts -36- is to allow the cables -3- to be able to rotate both in the plane of the upper base -34- and in the plane perpendicular to the upper base -34-, such that they allow the respective cables to pull on the platform -1- and at the same time allow the platform -1- to be freely oriented. The cardan shafts also prevent wear that could occur with other types of attachments.

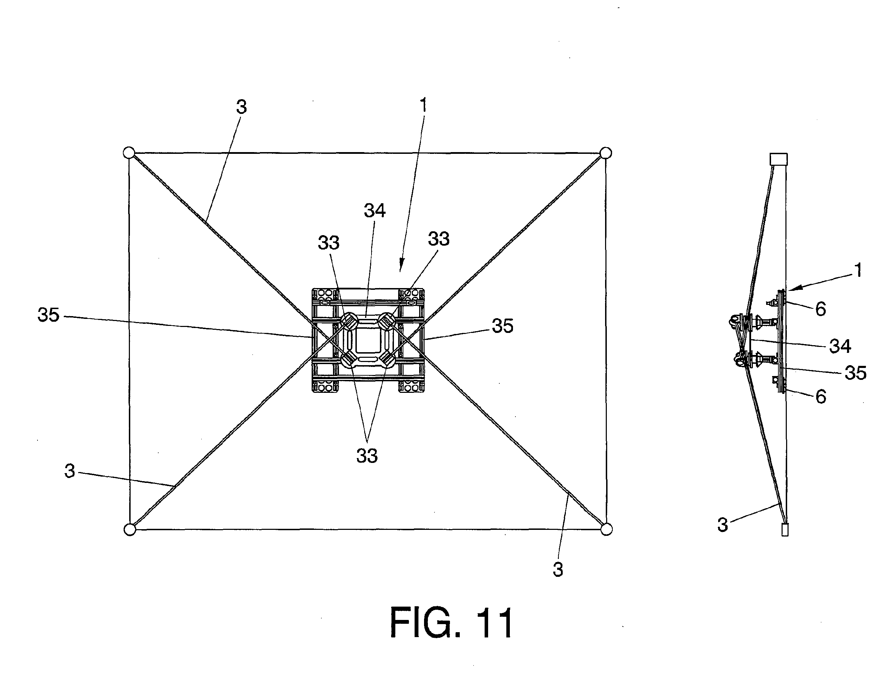

It can be observed that the positioning device described above allows the platform -1-
- to theoretically cover the entire area demarcated by the polygon resulting from attaching the entry points of the cable -14- in the cable gathering mechanisms -4- (Figure 11), unless there are collisions between solids or cables or a determined maximum cable tension is reached;
- to resist, in each valid point of the work space, any type of external or internal force without the cables -3- losing tension, unless a determined maximum cable tension is reached;
- to reach all the points of the surface and orient with a constant orientation α = 0 (see Figure 2), unless there are collisions between solids or cables or a determined maximum cable tension is reached, and to give the platform an orientation different from α = 0 within certain limits.

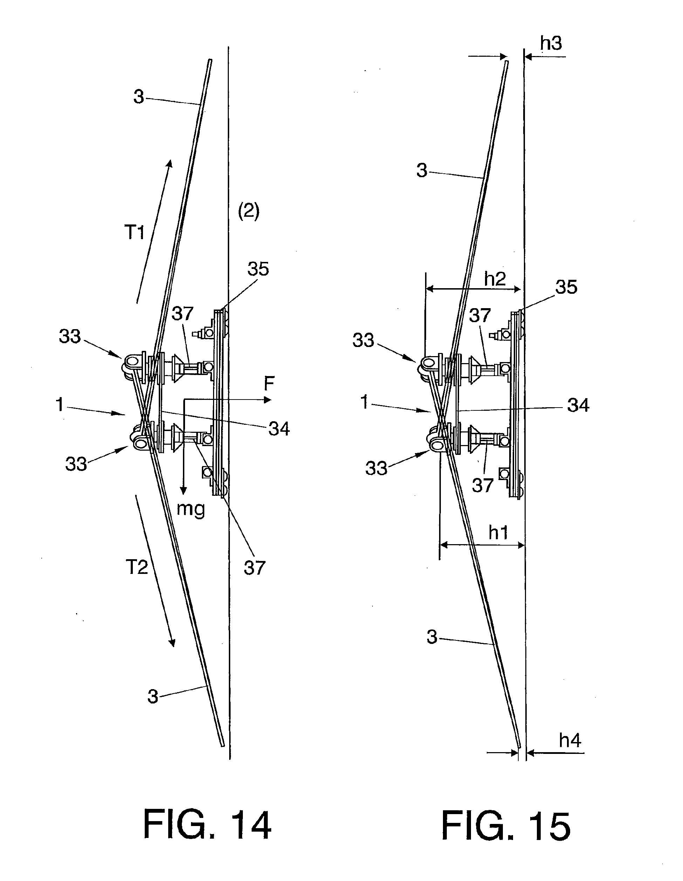

This is achieved as a result of the arrangement of the points for anchoring the cables to the cable gathering and release mechanisms -4-, the design of the platform -1- and the redundant number of cables -3-. Since the points for anchoring are symmetrical in twos and placed at different distances from the work surface, the cables -3- will always have an oblique orientation with respect to the work surface, so a force component F is generated on the platform -1- which constantly maintains it against the work surface (Figure 11 and Figure 14). On the other hand, the redundant number of cables -3- means that for the different positions of the platform, there is always an excess cable -3- that can be used to tense the remaining cables -3- and prevent them from starting to work under compression with any external excitation. If necessary for determined applications, the coordinates of the points for attaching the cables both to the cable gathering and release mechanism -4- and to the platform -1- can be reviewed and modified to prevent collisions between cables or to minimize tensions (Figure 15).

## Claims

1. Positioning device controlled by cables (3) comprising four cables connected at their respective first ends in respective anchoring mechanisms (36) of a platform (1) and at their respective second ends in respective cable gathering and release mechanisms (4) and driven by respective motors (10) for displacing the platform (1) with respect to a work surface (2) by means of the controlled release and gathering of the cables (3), **characterized in that**
the platform (1) has a support base (35) provided with means for sliding (6) over the work surface (2);
at least one of the cables (3) extends obliquely between a first plane parallel to the work surface (2) in which the cable gathering and release mechanism (4) is arranged and a second plane parallel to the work surface (2) in which the anchoring mechanism (36) is located, such that the tractive force exerted in the mentioned cables (3) by the cable release and gathering mechanisms (4) have a resultant, with a component perpendicular to the work surface (2) which pushes the support base (35) of the platform (1) against the work surface (2) and a component parallel to the work surface (2) which causes the sliding of the support base (35) over the work surface (2);
**characterized in that**
each anchoring mechanism (36) is located at a distance from the support base (35) such that each cable (3) extends obliquely with respect to the work surface (2) between the anchoring mechanism (36) and the cable gathering and release mechanism (4) to which it is connected;
the anchoring mechanisms (36) comprise a first pair of anchoring mechanisms (36) arranged in a first row and connected to respective cables (3) of a first pair of cables, and a second pair of anchoring mechanisms (36) arranged in a second row and connected to respective cables (3) of a second pair of cables;
each cable (3) connected to an anchoring mechanism (36) of said first row intersects with a cable (3) connected to an anchoring mechanism (36) of said second row, such that the traction of the cables (3) by the respective cable gathering and release mechanisms (4) forces the support base (35) of the platform (1) against the work surface (2).

2. Positioning device according to claim 1, **characterized in that** the anchoring mechanisms (36) of the first row of said support base are located perpendicularly at a greater distance than the anchoring mechanisms (36) of the second row.

3. Positioning device according to any of claims 1 and 2, **characterized in that** the platform (1) comprises a lower base (35) comprising the support base and an upper base (34) in which the anchoring mechanisms (36) are arranged; and connection means (37) for attaching the lower base (35) with the upper base (34).

4. Positioning device according to claim 3, **characterized in that** the upper platform (34) has a larger contour than the lower platform (35).

5. Positioning device according to any of claims 1 to 3, **characterized in that** the anchoring mechanism (36) of each cable (3) is a cardan shaft.

6. Positioning device according to any of the previous claims, **characterized in that** each cable gathering and release mechanism (4) comprises an orienting device (7), a spindle device (8) and a cable storage device (9), and **in that**
the cable storage device (9) comprises a drum (28) for winding and unwinding the cable (3) by rotating about a drum axle (31);
the spindle device (8) comprises a carriage (25) which moves linearly along a spindle axle (24) guiding the cable (3) so that it moves forward to a distance corresponding to the width of a spiral of the drum (28) when the cable (3) is gradually wound on or unwound from the drum (28);
the orienting device (7) orients the cable (3) towards the spindle device (8) and comprises a pair of input rollers (14) between which the cable (3) moves towards the platform (1), the input rollers being assembled in a rotating arm (15) which rotates coplanar to the work surface (2) according to the position of the cable (3).

7. Positioning device according to claim 6, **characterized in that**
the drum axle (31) and the spindle axle (24) are parallel;
the drum (28) is connected to the motor (10);
the axle (31) of the drum (28) and the spindle axle (24) are provided with respective gears (11, 12) arranged such that the axle (31) of the drum (28) confers rotational movement to the spindle (24);
the orienting device (7) comprises a larger pulley (18) which rotates about a shaft perpendicular to the spindle axle (24) and redirects the cable (3) towards the spindle device (8) parallel to the spindle axle (24);
the spindle device (8) comprises an auxiliary linear guide (26) parallel to the spindle axle (24),
the carriage (25) comprises a sliding body (25b) which slides over the auxiliary linear guide (26) when the carriage (25) moves forward on the spindle axle, and a guide pulley (27) which directs the cable (3) perpendicularly towards the axle (31) of the drum (28).

8. Positioning device according to claim 7, **characterized in that** the larger pulley (18) is arranged in a side arm (25a) connecting the carriage (25) with the sliding body (25b).

9. Positioning device according to any of claims 6 to 8, **characterized in that** the rotating arm (15) of the orienting device (7) is connected to a rotating shaft (16) transmitting its rotational movements to a rotary encoder (17).

10. Positioning device according to any of claims 6 to 9, **characterized in that** the rotating arm (15) and the larger pulley (18) are assembled in respective passive rotating shafts (20) of a passive rotating mechanism (19) which allows the rotation of the rotating arm (15) and of the larger pulley (18) about a shaft coaxial with the spindle axle (24).

11. Positioning device according to claim 9, **characterized in that** the passive rotating mechanism (19) is connected to a rotary encoder (22) which determines the rotation of the rotating arm (15) and of the larger pulley (18) about said coaxial shaft.

12. Positioning device according to any of claims 6 to 11, **characterized in that** the drum (28) is connected to the motor (10) through a reduction gear (32).

13. Positioning device according to any of claims 6 to 12, **characterized in that** the orienting device (7), the spindle device (8) and the cable storage device (9) are assembled in a common support base (13).

14. Positioning device according to one of the previous claims, **characterized in that** the cable release and gathering mechanisms (4) are assembled in an auxiliary structure (5) surrounding at least part of the work surface (2).

## Patentansprüche

1. Positioniervorrichtung, die durch Seile (3) gesteuert ist, umfassend vier Seile, die an ihren jeweiligen ersten Enden jeweils mit Ankermechanismen (36) einer Plattform (1) verbunden sind und die an ihren jeweiligen zweiten Enden jeweils mit Seilerfassungs- und -Freigabemechanismen (4) verbunden sind und die durch jeweilige Motoren (10) zum Verschieben der Plattform (1) in Bezug auf eine Arbeitsoberfläche (2) durch das kontrollierte Freigeben und Erfassen der Seile (3) angetrieben werden, **dadurch gekennzeichnet, dass**
die Plattform (1) eine Stützbasis (35) aufweist, die mit einem Mittel zum Gleiten (6) über die Arbeitsoberfläche (2) versehen ist;
zumindest eines der Seile (3) sich schräg zwischen einer ersten Ebene parallel zu der Arbeitsoberfläche (2), in welcher der Seilerfassungs- und -Freigabemechanismus (4) angeordnet ist, und einer zweiten Ebene parallel zu der Arbeitsoberfläche (2), in welcher der Ankermechanismus (36) angeordnet ist, derart erstreckt, dass die durch die Seilerfassungs- und -Freigabemechanismen (4) auf die genannten Seile (3) ausgeübte Traktionskraft eine Resultierende mit einer senkrecht zur Arbeitsoberfläche (2) ausgerichteten Komponente, welche die Stützbasis (35) der Plattform (1) gegen die Arbeitsoberfläche (2) drückt, und einer parallel zur Arbeitsoberfläche (2) ausgerichteten Komponente, die das Gleiten der Stützbasis (35) über die Arbeitsoberfläche (2) bewirkt, aufweist;
**dadurch gekennzeichnet, dass**
jeder Ankermechanismus (36) derart in einem Abstand von der Stützbasis (35) angeordnet ist, dass jedes Seil (3) sich schräg in Bezug auf die Arbeitsoberfläche (2) zwischen dem Ankermechanismus (36) und dem Seilerfassungs- und - Freigabemechanismus (4), womit es verbunden ist, erstreckt;
der Ankermechanismus (36) ein erstes Paar Ankermechanismen (36), die in einer ersten Reihe angeordnet und jeweils mit Seilen (3) eines ersten Paars Seile verbunden sind, und ein zweites Paar Ankermechanismen (36), die in einer zweiten Reihe angeordnet und jeweils mit Seilen (3) eines zweiten Paars Seile verbunden sind, aufweist;
wobei jedes Seil (3), das mit einem Ankermechanismus (36) der ersten Reihe verbunden ist, ein Seil (3) kreuzt, das mit einem Ankermechanismus der zweiten Reihe verbunden ist, so dass die Traktion der Seile (3) durch die jeweiligen Seilerfassungs- und -Freigabemechanismen (4) die Stützbasis (35) der Plattform (1) gegen die Arbeitsoberfläche (2) zwingt.

2. Positioniervorrichtung nach Anspruch 1, **dadurch gekennzeichnet, dass** die Ankermechanismen (36) der ersten Reihe der Stützbasis senkrecht in größerem Abstand angeordnet sind als die Ankermechanismen (36) der zweiten Reihe.

3. Positioniervorrichtung nach einem der Ansprüche 1 und 2, **dadurch gekennzeichnet, dass** die Plattform (1) eine untere Basis (35) umfassend die Stützbasis und eine obere Basis (34), in der die Ankermechanismen (36) angeordnet sind; und ein Verbindungsmittel (37) zum Anbringen der unteren Basis (35) an der oberen Basis (34) aufweist.

4. Positioniervorrichtung nach Anspruch 3, **dadurch gekennzeichnet, dass** die obere Plattform (34) einen größeren Umriss als die untere Plattform (35) aufweist.

5. Positioniervorrichtung nach einem der Ansprüche 1 bis 3, **dadurch gekennzeichnet, dass** die Ankervorrichtung (36) jedes Seils eine Kardanwelle ist.

6. Positioniervorrichtung nach einem der vorhergehenden Ansprüche, **dadurch gekennzeichnet, dass** jeder Seilerfassungs- und -Freigabemechanismus (4) eine Ausrichtungsvorrichtung (7), eine Spindelvorrichtung (8) und eine Seilspeichervorrichtung (9) aufweist und dass
die Seilspeichervorrichtung (9) eine Trommel (28) zum Aufwickeln und Abwickeln des Seils (3) durch Rotieren um eine Trommelachse (31) aufweist;
die Spindelvorrichtung (8) einen Wagen (25) aufweist, der sich linear entlang einer Spindelachse (24), die das Seil (3) führt, so bewegt, dass er sich um eine Distanz nach vorne bewegt, die einer Breite einer Spirale der Trommel (28) entspricht, wenn das Seil (3) allmählich auf die Trommel (28) gewickelt oder von ihr abgewickelt wird;
die Ausrichtungsvorrichtung (7) das Seil (3) zur Spindelvorrichtung (8) hin ausrichtet und ein Paar Eingaberollen (14), zwischen denen sich das Seil (3) in Richtung der Plattform (1) bewegt, aufweist, wobei die Eingaberollen in einem Rotationsarm (15) angeordnet sind, der coplanar mit der Arbeitsoberfläche (2) gemäß der Position des Seils (3) rotiert.

7. Positioniervorrichtung nach Anspruch 6, **dadurch gekennzeichnet, dass**
die Trommelachse (31) und die Spindelachse (24) parallel sind;
die Trommel (28) mit dem Motor (10) verbunden ist;
die Achse (31) der Trommel (28) und die Spindelachse (24) jeweils mit Zahnrädern (11, 12) versehen sind, die derart angeordnet sind, dass die Achse (31) der Trommel (28) eine Rotationsbewegung auf die Spindel (24) überträgt;
die Ausrichtungsvorrichtung (7) eine größere Antriebsscheibe (18) aufweist, die um eine Welle senkrecht zur Spindelachse (24) rotiert und das Seil (3) in Richtung der Spindelvorrichtung (8) parallel zur Spindelachse (24) umlenkt;
die Spindelvorrichtung (8) eine lineare Hilfsführung (26) parallel zur Spindelachse (24) aufweist,
der Wagen (25) einen Gleitkörper (25b), der über die lineare Hilfsführung (26) gleitet, wenn der Wagen (25) sich auf der Spindelachse nach vorn bewegt, und eine Führungsantriebsscheibe (27), die das Seil (3) senkrecht in Richtung der Achse (31) der Trommel (28) lenkt, aufweist.

8. Positioniervorrichtung nach Anspruch 7, **dadurch gekennzeichnet, dass** die größere Antriebsscheibe (18) in einem Seitenarm (25a) angeordnet ist, der den Wagen (25) mit dem Gleitkörper (25b) verbindet.

9. Positioniervorrichtung nach einem der Ansprüche 6 bis 8, **dadurch gekennzeichnet, dass** der Rotationsarm (15) der Ausrichtungsvorrichtung (7) mit einer Rotationswelle (16) verbunden ist, die ihre Rotationsbewegungen auf einen Rotationsgeber (17) überträgt.

10. Positioniervorrichtung nach einem der Ansprüche 6 bis 9, **dadurch gekennzeichnet, dass** der Rotationsarm (15) und die größere Antriebsscheibe (18) in jeweiligen passiven Rotationswellen (20) eines passiven Rotationsmechanismus (19) angeordnet sind, der die Rotation des Rotationsarms (15) und der größeren Antriebsscheibe (18) um die Welle koaxial mit der Spindelachse (24) erlaubt.

11. Positioniervorrichtung nach Anspruch 9, **dadurch gekennzeichnet, dass** der passive Rotationsmechanismus (19) mit einem Rotationsgeber (22) verbunden ist, der die Rotation des Rotationsarms (15) und der größeren Antriebsscheibe (18) um die koaxiale Welle bestimmt.

12. Positioniervorrichtung nach einem der Ansprüche 6 bis 11, **dadurch gekennzeichnet, dass** die Trommel (28) mit dem Motor (10) durch ein Untersetzungsgetriebe (32) verbunden ist.

13. Positioniervorrichtung nach einem der Ansprüche 6 bis 12, **dadurch gekennzeichnet, dass** die Ausrichtungsvorrichtung (7), die Spindelvorrichtung (8) und die Seilspeichervorrichtung (9) in einer gemeinsamen Stützbasis (13) angeordnet sind.

14. Positioniervorrichtung nach einem der vorhergehenden Ansprüche, **dadurch gekennzeichnet, dass** die Seilfreigabe- und -Erfassungsmechanismen (4) in einer Hilfsstruktur (5) zusammengestellt sind, die zumindest einen Teil der Arbeitsoberfläche (2) umgeben.

## Revendications

1. Dispositif de positionnement commandé par des câbles (3) comprenant quatre câbles raccordés à leurs premières extrémités respectives dans des mécanismes d'ancrage (36) respectifs d'une plate-forme (1) et à leurs secondes extrémités respectives dans des mécanismes de regroupement et de libération de câble (4) respectifs et entraînés par des moteurs (10) respectifs permettant de déplacer la plate-forme (1) par rapport à une surface de travail (2) au moyen de la libération et du regroupement commandés des câbles (3), **caractérisé en ce que**
la plate-forme (1) comporte une base de support (35) pourvue d'un moyen de glissement (6) sur la surface de travail (2) ;
au moins l'un des câbles (3) s'étend à l'oblique entre un premier plan parallèle à la surface de travail (2) dans lequel le mécanisme de regroupement et de libération de câble (4) est agencé et un second plan parallèle à la surface de travail (2) dans lequel le mécanisme d'ancrage (36) est situé, de telle sorte que la force de traction exercée dans lesdits câbles (3) par les mécanismes de libération et de regroupement de câble (4) a une résultante, avec une composante perpendiculaire à la surface de travail (2) qui pousse la base de support (35) de la plate-forme (1) contre la surface de travail (2) et une composante parallèle à la surface de travail (2) qui provoque le glissement de la base de support (35) sur la surface de travail (2) ;
**caractérisé en ce que**
chaque mécanisme d'ancrage (36) est situé à une distance de la base de support (35) telle que chaque câble (3) s'étend à l'oblique par rapport à la surface de travail (2) entre le mécanisme d'ancrage (36) et le mécanisme de regroupement et de libération de câble (4) auquel il est raccordé ;
les mécanismes d'ancrage (36) comprennent une première paire de mécanismes d'ancrage (36) agencée dans une première rangée et raccordée à des câbles (3) respectifs d'une première paire de câbles, et une seconde paire de mécanismes d'ancrage (36) agencée dans une seconde rangée et raccordée à des câbles (3) respectifs d'une seconde paire de câbles ;
chaque câble (3) raccordé à un mécanisme d'ancrage (36) de ladite première rangée coupe un câble (3) raccordé à un mécanisme d'ancrage (36) de ladite seconde rangée, de telle sorte que la traction des câbles (3) par les mécanismes de regroupement et de libération de câble (4) respectifs force la base du support (35) de la plate-forme (1) contre la surface de travail (2).

2. Dispositif de positionnement selon la revendication 1, **caractérisé en ce que** les mécanismes d'ancrage (36) de la première rangée de ladite base de support sont situés perpendiculairement à une plus grande distance que les mécanismes d'ancrage (36) de la seconde rangée.

3. Dispositif de positionnement selon l'une quelconque des revendications 1 et 2, **caractérisé en ce que** la plate-forme (1) comprend une base inférieure (35) comprenant la base de support et une base supérieure (34) dans laquelle les mécanismes d'ancrage (36) sont agencés ; et des moyens de raccordement (37) permettant d'attacher la base inférieure (35) à la base supérieure (34).

4. Dispositif de positionnement selon la revendication 3, **caractérisé en ce que** la plate-forme supérieure (34) a un contour plus grand que la plate-forme inférieure (35).

5. Dispositif de positionnement selon l'une quelconque des revendications 1 à 3, **caractérisé en ce que** le mécanisme d'ancrage (36) de chaque câble (3) est un arbre de transmission à cardan.

6. Dispositif de positionnement selon l'une quelconque des revendications précédentes, **caractérisé en ce que** chaque mécanisme de regroupement et de libération de câble (4) comprend un dispositif d'orientation (7), un dispositif de fuseau (8) et un dispositif de stockage de câble (9) et **en ce que**
le dispositif de stockage de câble (9) comprend un tambour (28) permettant d'enrouler et de dérouler le câble (3) en tournant autour d'un essieu de tambour (31) ;
le dispositif de fuseau (8) comprend un chariot (25) qui se déplace linéairement le long d'un essieu de fuseau (24) guidant le câble (3) de sorte qu'il se déplace vers l'avant jusqu'à une distance correspondant à la largeur d'une spirale du tambour (28) lorsque le câble (3) est progressivement enroulé sur ou déroulé du tambour (28) ;
le dispositif d'orientation (7) oriente le câble (3) vers le dispositif de fuseau (8) et comprend une paire de rouleaux d'entrée (14) entre lesquels le câble (3) se déplace vers la plate-forme (1), les rouleaux d'entrée étant assemblés dans un bras tournant (15) qui tourne de manière coplanaire avec la surface de travail (2) selon la position du câble (3).

7. Dispositif de positionnement selon la revendication 6, **caractérisé en ce que**
l'essieu de tambour (31) et l'essieu de fuseau (24) sont parallèles ;
le tambour (28) est raccordé au moteur (10) ; et
l'essieu (31) du tambour (28) et l'essieu de fuseau (24) sont pourvus de roues d'engrenage (11, 12) respectives agencées de telle manière que l'essieu (31) du tambour (28) confère un mouvement de rotation au fuseau (24) ;
le dispositif d'orientation (7) comprend une poulie plus grande (18) qui tourne autour d'un arbre perpendiculaire à l'essieu de fuseau (24) et redirige le câble (3) vers le dispositif de fuseau (8) parallèle à l'essieu de fuseau (24) ;
le dispositif de fuseau (8) comprend un guide linéaire auxiliaire (26) parallèle à l'essieu de fuseau (24),
le chariot (25) comprend un corps coulissant (25b) qui coulisse sur le guide linéaire auxiliaire (26) lorsque le chariot (25) se déplace vers l'avant sur l'essieu de fuseau, et une poulie guide (27) qui dirige le câble (3) perpendiculairement vers l'essieu (31) du tambour (28).

8. Dispositif de positionnement selon la revendication 7, **caractérisé en ce que** la poulie plus grande (18) est agencée dans un bras de côté (25a) raccordant le chariot (25) au corps coulissant (25b).

9. Dispositif de positionnement selon l'une quelconque des revendications 6 à 8, **caractérisé en ce que** le bras tournant (15) du dispositif d'orientation (7) est raccordé à un arbre tournant (16) transmettant ses mouvements de rotation à un encodeur rotatif (17).

10. Dispositif de positionnement selon l'une quelconque des revendications 6 à 9, **caractérisé en ce que** le bras tournant (15) et la poulie plus grande (18) sont assemblés dans des arbres tournants passifs (20) respectifs d'un mécanisme tournant passif (19) qui permet la rotation du bras tournant (15) et de la poulie plus grande (18) autour d'un arbre coaxial avec l'essieu de fuseau (24).

11. Dispositif de positionnement selon la revendication 9, **caractérisé en ce que** le mécanisme tournant passif (19) est raccordé à un encodeur rotatif (22) qui détermine la rotation du bras tournant (15) et de la poulie plus grande (18) autour dudit arbre coaxial.

12. Dispositif de positionnement selon l'une quelconque des revendications 6 à 11, **caractérisé en ce que** le tambour (28) est raccordé au moteur (10) par l'intermédiaire d'un réducteur (32).

13. Dispositif de positionnement selon l'une quelconque des revendications 6 à 12, **caractérisé en ce que** le dispositif d'orientation (7), le dispositif de fuseau (8) et le dispositif de stockage de câble (9) sont assemblés dans une base de support commune (13).

14. Dispositif de positionnement selon l'une des revendications précédentes, **caractérisé en ce que** les mécanismes de libération et de regroupement de câble (4) sont assemblés dans une structure auxiliaire (5) entourant au moins une partie de la surface de travail (2).
